# EUROPÄISCHE PATENTSCHRIFT

(11) **EP 2 555 969 B1**
(45) Veröffentlichungstag und Bekanntmachung des Hinweises auf die Patenterteilung: **05.12.2018**
(21) Anmeldenummer: 11710458.8
(22) Anmeldetag: 18.03.2011
(51) Int. Cl.: B63B 39/06, B63H 9/02

(54) **SCHIFF MIT VERSTELLBARER PLATTE AM BUG**
SHIP WITH ADJUSTABLE PANEL ON THE BOW
NAVIRE À PLAQUE RÉGLABLE À LA PROUE

(30) Priorität: 06.04.2010 DE 102010003662
(43) Veröffentlichungstag der Anmeldung: 13.02.2013
(73) Patentinhaber: Wobben Properties GmbH, 26607 Aurich (DE)
(72) Erfinder: ROHDEN, Rolf, 26607 Aurich (DE)
(74) Vertreter: Eisenführ Speiser
(86) Internationale Anmeldenummer: PCT/EP2011/054136
(87) Internationale Veröffentlichungsnummer: WO 2011/124460

(56) Entgegenhaltungen:
- EP-A1- 1 873 055
- DE-A1- 3 425 426
- RU-C1- 2 063 362
- US-A- 2 151 836
- US-A- 2 584 347
- US-A- 3 004 510
- US-A- 3 808 998
- US-A- 4 377 123
- US-A- 4 776 294

## Beschreibung

Die Erfindung betrifft ein Schiff, insbesondere ein Schiff mit wenigstens einem Segelrotor.

Ein Segelrotor ist ein rotierender Zylinder, welcher auf dem Schiff angeordnet wird und der von einem Motor, vorzugsweise von einem Elektromotor angetrieben wird und dabei in Verbindung mit dem vorbeistreichenden Wind Schub erzeugt. Die Physik dieser Segelrotoren wurde bereits von dem Physiker Magnus beschrieben und es gab schon einmal Schiffe mit solchen auch Magnus-Rotoren genannten Segelrotoren, die in den zwanziger Jahren von Anton Flettner erfolgreich erprobt wurden. Diese Technologie, z.B. bekannt aus DE 420840 und CH 116268, hat jedoch durch die Einführung der Dieselmotoren seinerzeit schnell an Bedeutung verloren.

Als weiteren Stand der Technik wird auf die folgenden Dokumente hingewiesen:
D1 - US 3 808 998 A
D2 - US 2 584 347 A
D3 - US 4 776 294 A
D4 - US 4 377 123 A
D5 - US 2 151 836 A
D6 - US 3 004 510 A
D7 - DE 34 25 426 A1
D8 - EP 1 873 055 A1
D9 - RU 2 063 362 C1

Die vorliegende Erfindung beschäftigt sich mit der Weiterentwicklung eines Schiffs mit wenigstens einem Segelrotor, vorzugsweise vier Segelrotoren und Ziel der Erfindung ist es nicht nur, mit der Segelrotortechnik den Brennstoffverbrauch eines Schiffs und damit auch den Schadstoffausstoß des Schiffes pro transportierter Tonne im Vergleich zur konventionellen Schifffahrt entscheidend zu senken, sondern auch einen sicheren Schiffsbetrieb zu ermöglichen, insbesondere wenn das Schiff ein großes Frachtschiff ist, mit ca. 130 m Länge und das Schiff als solches auch hochseetauglich sein soll und muss.

Das erfindungsgemäße Schiff verfugt dabei nicht nur über wenigstens einen Segelrotor, sondern auch über einen Schiffsschrauben(Propeller)-Antrieb, welcher von einem Elektromotor angetrieben wird. Der Elektromotor kann dabei eine elektrische Maschine sein, die z.B, auch als Generator vom Typ E-82 der Firma Enercon bekannt ist, jedoch als Motor betrieben wird und dabei auch durch Umrichter, die üblicherweise in Windenergieanlagen zum Einsatz kommen, angesteuert wird.

Fig. 1 zeigt eine erste Ausbildung eines Schiffs mit Segelrotoren, wie es auch aus WO 2006/133950 A2 bekannt ist.

Aufgabe der Erfindung ist es, das aus WO 2006/133950 bekannte Schiff so weiter zu entwickeln, dass auch Wellen, die das Vorderschiff erreichen, gebrochen werden und das Schiff somit hochseetauglich wird.

Die Aufgabe wird erfindungsgemäß mit einem Schiff mit den Merkmalen nach Anspruch 1 gelöst. Vorteilhafte Weiterbildungen sind in den weiteren Ansprüchen beschrieben.

Erfindungsgemäß weist das Vorderschiff eine gegenüber der Horizontalen verschwenkbare Platte auf, so dass dann, wenn starker Seegang und damit starker Wellengang zu verzeichnen ist, die Platte nach unten herunter geschwenkt werden kann und dann auf das Vorderschiff schlagende Wellen gebrochen werden und das damit eindringende Wasser zur Seite hin abfließen kann, ohne in das Schiff einzudringen.

Die am Vorderschiff gegenüber der Horizontalen schwenkbare Platte weist eine obere Stellung und eine untere Stellung auf. Die untere Stellung wird dann eingenommen, wenn hoher Seegang zu verzeichnen ist und eine Wellenbrecherfunktion erwünscht ist. Die obere Stellung wird dann eingenommen, wenn dies nicht der Fall ist und stattdessen der anstreichende Wind möglichst ohne Turbulenzen auf das Schiffsoberdeck geführt wird, um dort die Segelrotoren möglichst unverwirbelt und damit möglichst turbulenzfrei zu erfahren, um einen maximalen Magnus-Vortrieb bzw. eine Stabilisierung durch die Magnus-Rotoren zu gewährleisten.

Wenn also die Platte in ihrer oberen Stellung ist, dient sie dazu, den heranstreichenden Wind möglichst optimal zu den Magnus-Rotoren zu lenken.

Ist der Seegang zu stark, wird die Platte herunter geschwenkt, um die Wellenbrecherfunktion zu gewährleisten.

Die Erfindung ist nachstehend anhand eines in den Zeichnungen dargestellten Ausführungsbeispiels näher erläutert.

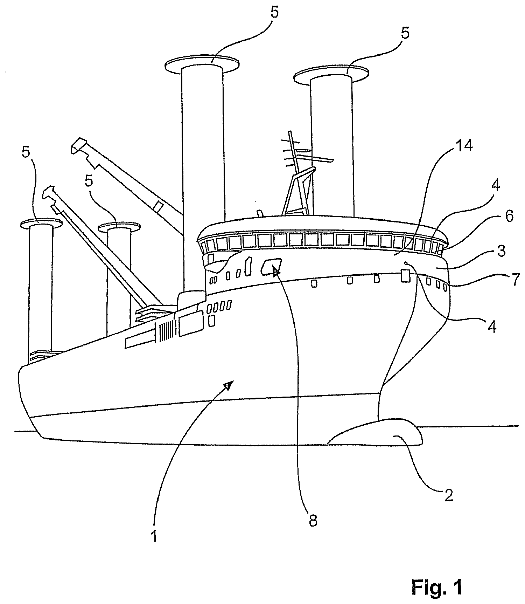

Fig. 1 zeigt ein erfindungsgemäßes Schiff mit vier Segelrotoren, auch Magnus- bzw. Flettner-Rotoren genannt. Fig. 1 zeigt dabei insbesondere auch das Schiff 1 von der Bugseite her, mit einem Wulstbug 2 und dem darüber angeordneten Vorderschiff 3. Das Vorderschiff geht dabei lückenlos in die Brücke 4 des Schiffs 1 über, hinter der sich die vier Segelrotoren 5 befinden.

Wie in Fig. 1 zu erkennen, weist das Vorderschiff nicht nur sehr sanfte Rundungen auf, die verhindern sollen, dass der anströmende Wind sich zu stark verwirbelt, sondern möglichst gleichmäßig und laminar an die Segelrotoren anstreichen kann. Auch steigt das Vorderschiff 3 bis kurz unterhalb der Fenster 6 der Brücke 4 hin an.

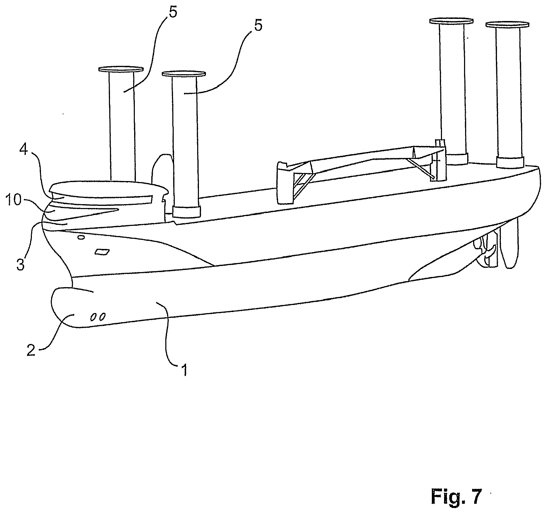

Wie in Fig. 1 oder Fig. 7 gut zu erkennen, nimmt die Höhe des Vorderschiffs von der Bugspitze bis zur Brücke hin zu (dies kann man besonders gut an der Breite des weißen Bereichs zwischen der schwarz-weißen Buglinie 7 und der Linie der Fenster 4 erkennen). Am Vorderschiffbereich ist ferner eine Öffnung 8 vorgesehen, die auch bei Bedarf auf Wunsch verschließbar ist. Die Bedeutung dieser Öffnung 8 wird im Folgenden weiter erläutert.

Wie in Fig. 1 zu erkennen, nimmt die Breite des Vorderschiffs von der Bugspitze her (wo das Vorderschiff am schmalsten ist) bis zur Brücke hin zu.

Durch die in Fig. 1 erkennbaren weichen Übergänge sowohl an der Bugspitze als auch über das Vorderschiff, über die Brücke, das Brückendach als auch die Brückenseitenwände wie auch die Seitenwände des Vorderschiffs kann der anstreichende Wind möglichst turbulenzfrei über Vorderschiff und Brücke zu den Segelrotoren 5 gelangen. Besonders wichtig ist dabei auch, dass von der Bugspitze 9 bis zu den Fenstern 4 der Brücke 6 das Vorderschiff gemächlich ansteigt, so dass die Luft in diesem Bereich dort an die Brücke bzw. an deren Fenster gelangt und dann entweder über das Brückendach oder entlang der Fenster (links oder rechts) die Brücke umstreicht, damit dann so die Luft bzw. der Wind auf die Segelrotoren 5 gelangt, um dort noch zur Schuberhöhung beitragen zu können.

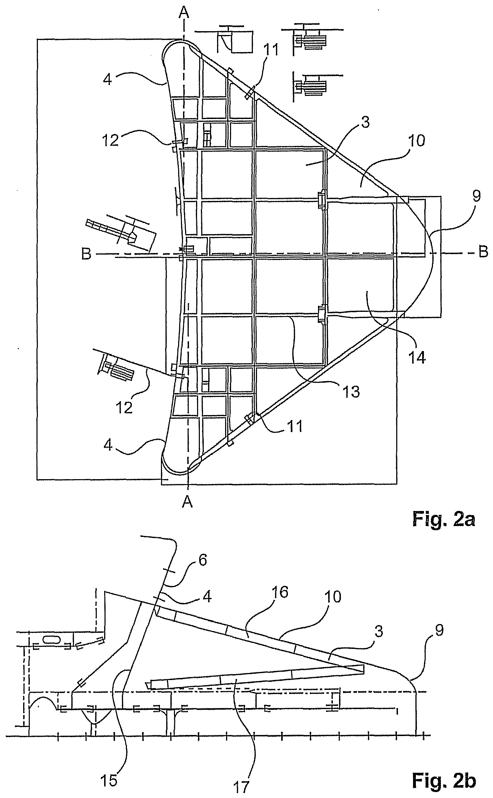

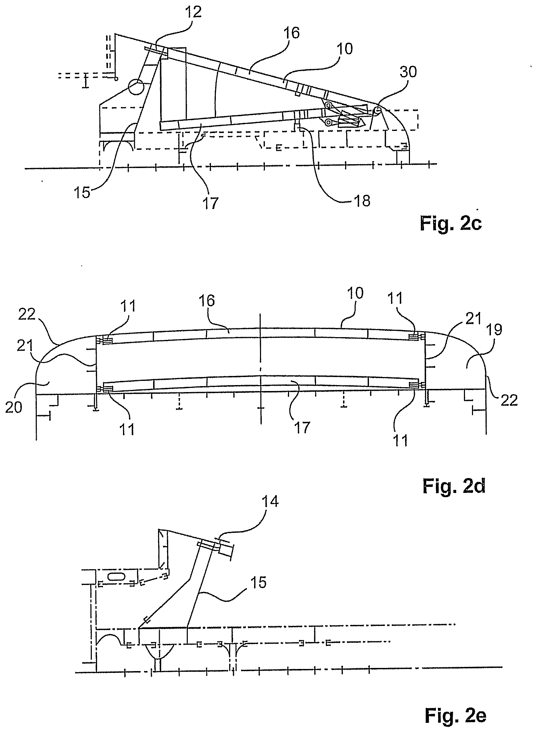

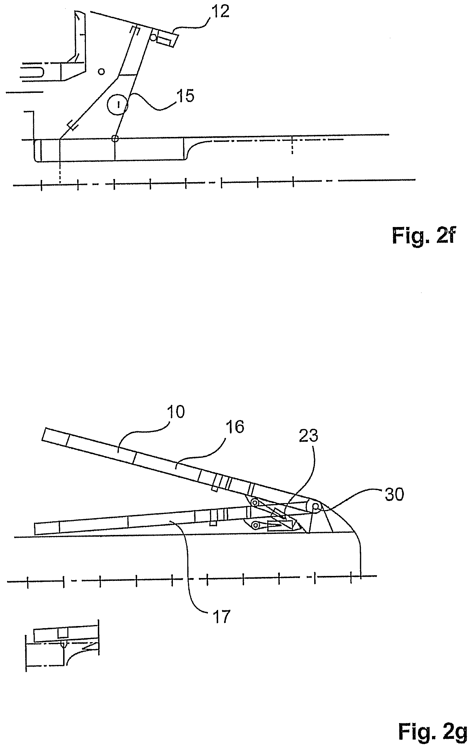

Fig. 2a zeigt von oben einen Blick auf das Vorderschiff 3. Das Vorderschiff weist eine - in etwa dreieckförmige - Platte 10 auf, welche in ihrem Vorderbereich im Bereich der Bugspitze 9 endet und im hinteren Bereich an der Konstruktion der Brücke 4 anliegt.

In Fig. 2a sind auch verschiedene Verriegelungen der Platte 10 zu erkennen, wobei Verriegelungen 11 sowohl zur Seite als auch Verriegelungen 12 zur Brücke hin vorgesehen sind. Die in Fig. 2a gezeigten Rechteckraster 13 sind Versteifungen der Platte 10, die unterhalb der Plattenoberfläche 14 angeordnet sind.

Fig. 2b zeigt einen Schnitt längs der Linie B-B durch Fig. 2a. Dabei ist einerseits die Platte 10 des Vorderschiffs 3 sowie der Übergang zum Bug bzw. zur Bugspitze 9 zu erkennen als auch die Anlage der Platte 10 an der Brücke 4 unterhalb der Fenster 6 der Brücke 4 andererseits. In Fig. 2b ist auch zu erkennen, dass die Brücke selbst einen Unterbau 15 aufweist, wobei dieser Unterbau im Wesentlichen aus einer massiven Stahlschiffswandung besteht, um das Gewicht der Brücke zu tragen und quer auf die Wandung einwirkende Kräfte aufzunehmen .

In Fig. 2b ist auch dargestellt, dass die Platte 10 in einer oberen Stellung 16 als auch einer unteren Stellung 17 verfahrbar ist.

Fig. 2c zeigt hierzu vorhandene Mechanismen zum Verschwenken der Platte 10 in die beiden Stellungen 16, 17, nämlich im Wesentlichen Hydraulikaggregate zum Heben und Senken der Platte 10, in deutlicherer Darstellung. Auch ist in Fig. 2c zu erkennen, dass die Platte in der oberen Position mit der Brückenwandung des Unterbaus 15 über einen Verriegelungsmechanismus 12 verriegelt ist.

Der Antrieb zum Heben und Senken der Platte besteht im Wesentlichen aus einem in einem Zylinder gelagerten Hydraulikkolben bzw. Stempel, welcher - nach Lösen der Verriegelungen 12 und 11 - dann, wenn die Hebelänge verkürzt wird, die Platte um ein Gelenk 30 nach unten senkt, bis sie auf einer Auflage 18 und/oder dem Boden aufliegt.

Wenn die Platte in der unteren Stellung 17 liegt, wird sie ebenfalls wiederum dort über Verriegelungen 11 an der Seite der Platte fixiert.

Fig. 2d zeigt einen weiteren Schnitt durch das Vorderschiff, nämlich längs der Linie A-A in Fig. 2a.

Hierbei ist zu erkennen die Lage der Platte 10 in der oberen Stellung 16 bzw. in der alternativen unteren Stellung 17. Auch sind die Verriegelungen 11 an den Seiten der Platte 10 zu erkennen.

Auch ist in Fig. 2d zu erkennen, dass links und rechts der Platte 10 Seitenwände 19 und 20 ausgebildet sind. Diese Seitenwände bestehen einerseits aus einem inneren Teil 21, an dem die Verriegelungen 11 fixiert sind sowie einem äußeren Teil 22, der auch schon in Fig. 1 zu erkennen ist, nämlich dort, wo der Wandungsteil des Vorderschiffes in die eher horizontale Ebene übergeht (bis zum Anstieg zu den Brückenfenstern), damit der anstreichende Wind möglichst turbulenzfrei das Vorderschiff überstreichen kann und zur Brücke bzw. den Segelrotoren gelangen kann.

Dort, wo die Platte 10 ihre breiteste Stelle aufweist, sind die Seitenwände 19 und 20 durchbrochen und von außen her ist die Öffnung 8 - siehe Fig. 1 - zu erkennen.

Man erkennt deutlich, dass dann, wenn die Platte 10 in der unteren Stellung 17 liegt, das über das Vorderschiff bei starkem See- und Wellengang einbrechende Wasser über die Platte 10 gelangt und gegen die Brückenwandung des Unterbaus 15 schlägt und dann durch die Öffnungen 8 nach links und rechts wieder abfließen kann. Das Abfließen wird dabei auch unterstützt durch die Ausbildung der Platte 10, die nicht völlig horizontal ist, sondern zu den linken und rechten Seiten hin leicht abfällt, wie in Fig. 2d gut zu erkennen ist.

Gleichzeitig hat diese Ausbildung der Platte 10 auch den Vorteil, dass die Platte 10 dann, wenn sie in ihrer oberen Stellung 16 ist, das Heranstreichen des Windes und damit die optimale Umströmung der Brücke unterstützt.

Fig. 2e zeigt die Ausbildung der Verriegelung 12 als Steckbolzen.

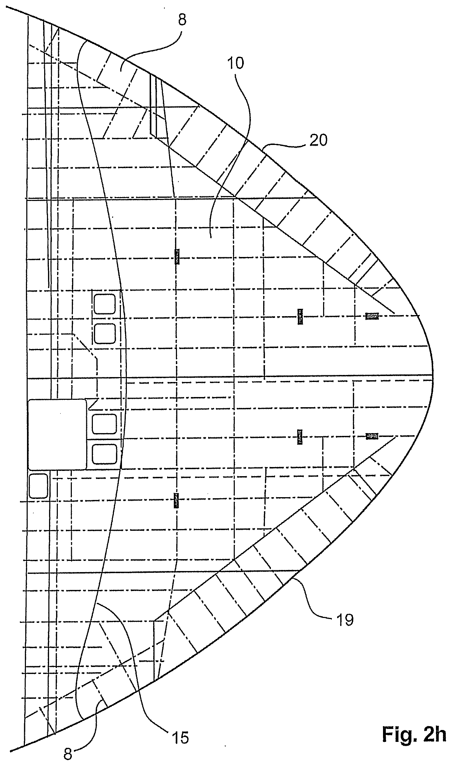

Fig. 2g zeigt noch einmal die Ausbildung der Platte 10 in den beiden verschiedenen Positionen "Oberstellung" 16 und "Unterstellung" 17 und Fig. 2h zeigt den kompletten Blick auf das Oberdeck des Vorderschiffs mit der Platte 10, den Verlauf der Kontur der Brückenwandung 15, der Seitenwände 19 und 20 sowie der Öffnungen 8. In der Aufsicht der Fig. 2h ist auch zu erkennen, dass die Brückenwandung nicht gerade verläuft, sondern von der Bugspitze her gesehen im zentralen Bereich maximal nahe zur Bugspitze liegt und dann an der linken und rechten Seite leicht nach hinten hin verschoben ist, um somit das einströmende Wasser gleichzeitig nach außen hin und in Richtung der Öffnungen 8 weiter zu lenken.

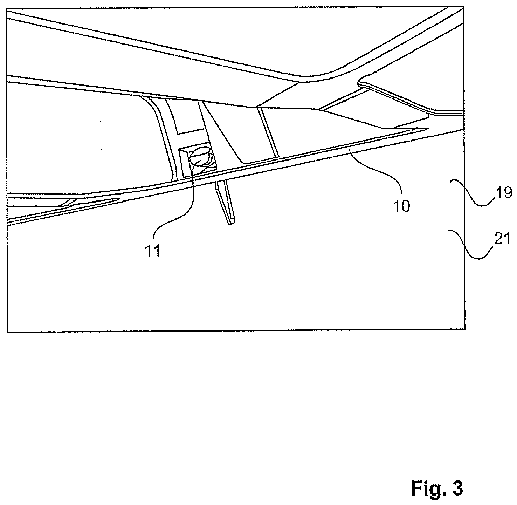

Fig. 3 zeigt einen Blick von unten auf die Platte 10 (mit Versteifungen/Verstrebungen) des Vorderschiffs 3 und einer seitlichen Verriegelung 11. Die seitliche Verriegelung 11 besteht dabei im Wesentlichen aus einem linear bewegbaren Steckbolzen, weicher durch einen Antrieb vor- und zurückbewegbar ist und welcher an der Innenwandung 21 der Seitenwand 19 ausgebildet ist.

Fig. 4 zeigt einen Blick von unten gegen die Platte 10 mit ihren Verstrebungen und dort ist auch ein Hydraulikantrieb 23 zu erkennen sowie die Innenwandung 21 der Seitenwand 19.

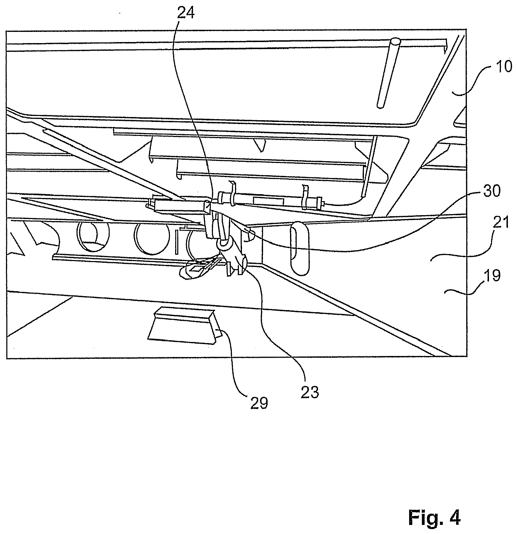

In der Fig. 4 ist auch im mittleren Bereich die Auflage 18 zu erkennen, auf die die Platte 10 dann, wenn sie in die untere Stellung 17 bewegt wird, aufliegt, wobei Gummipuffer 24 vorgesehen sind, um einen harten Aufprall der Platte 10 zu vermeiden. Die Antriebe 23 selbst sind von der Brücke her fernsteuerbar und Gleiches gilt auch für die jeweiligen Verriegelungen 11, 12.

Vor der Bewegung der Platte 10 werden also die Verriegelungen 11, 12 gelöst, so dass dann die Platte 10 in die jeweils gewünschte Position 16 oder 17 bewegt werden kann.

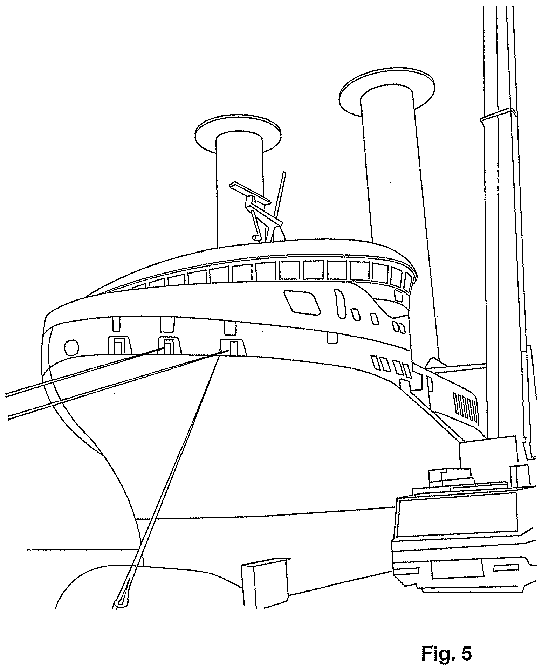

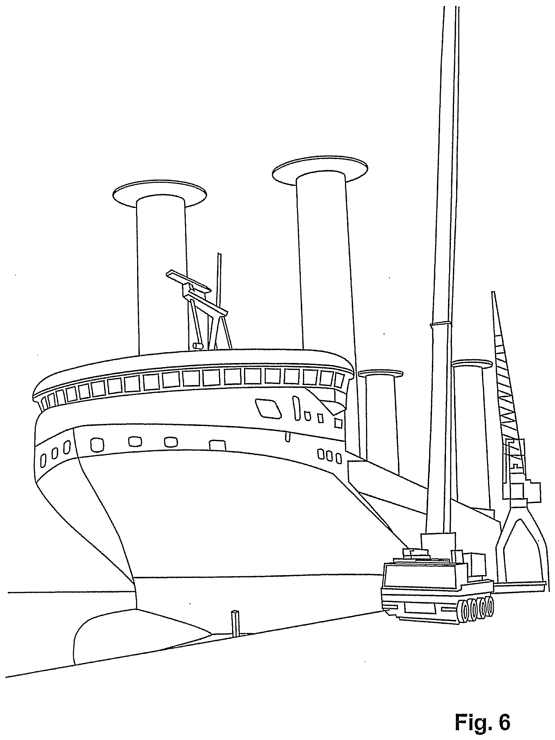

Die Fig. 5 und 6 zeigen weitere Aufsichten auf das erfindungsgemäße Schiff bzw. Vorderschiff des Schiffes.

Wie erwähnt, ist die normale Position der Platte 10 des Vorderschiffs 3 diejenige in der oberen Stellung 16.

Kommt nun schwerer Seegang auf, so kann die Platte 10 des Vorderschiffs 3 von der Brücke aus sehr schnell in die untere Position 17 bewegt werden, so dass auf das Vorderschiff aufschlagende Wellen gar nicht erst in den Bereich der Fenster der Brücke gelangen, sondern gegen die Brückenwandung 15 des Schiffes schlagen, dort gebrochen werden und nach links und rechts durch die Öffnungen 8 abfließen können.

Die Höhe der Platte 10 dort, wo sie in der oberen Stellung an der Brückenwandung 15 anliegt, beträgt ca. 2 m über dem Boden, welcher auch in Fig. 4 zu erkennen ist. Mithin werden solche starken Wellen bzw. Brecher, die überhaupt über das Vorderschiff gelangen, sehr effizient von der Brücke bzw. deren Fenster ferngehalten werden und können somit die Brücke nicht gefährden.

Bei normalem Seegang werden die Wellen nicht so hoch über das Vorderschiff schlagen und dann wird die Platte 10 des Vorderschiffs 3 in der oberen Stellung 16 gehalten, um somit den Schiffsvortrieb und den Betrieb der Segelrotoren optimal zu unterstützen.

Durch die weichen Außenkonturen auch des Vorderschiffs - siehe insbesondere die Fig. 1, Fig. 2d und 2h - wird dabei nicht nur der Windwiderstand des Schiffes deutlich verringert, sondern die Wind/Luftführung über die Segelrotoren wird optimal gestaltet, damit diese den Wind möglichst turbulenzfrei, also laminar, erfahren.

Fig. 7 zeigt eine weitere Ansicht des erfindungsgemäßen Schiffes, bei dem die Platte 10 des Vorderschiffes 3 durch eine dunkle Kontrastierung hervorgehoben ist. In der Seitenansicht ist wiederum gut zu erkennen, dass das Vorderschiff bzw. die Platte 10 bis zur Brücke 4 und deren Fenster sanft ansteigt und die Platte 10 in ihrer dargestellten oberen Stellung 16 innerhalb der Außenkonturen des Vorderschiffes 3 liegt und somit eine verwirbelungsfreie Anströmung des Windes zur Brücke bzw. zu den dahinter liegenden Magnus-Rotoren begünstigt.

## Patentansprüche

1. Schiff mit wenigstens einem Segelrotor (5), wobei das Schiff (1) ein Vorderschiff (3) aufweist, welches eine in der Höhe gegenüber der horizontalen höhenverstellbare und/oder schwenkbare Platte (10) aufweist, wobei die Platte eine obere Stellung und eine untere Stellung einnehmen kann, wobei die untere Stellung dann eingenommen wird, wenn hoher Seegang zu verzeichnen ist und eine Wellenbrecherfunktion gewünscht ist, und wobei die obere Stellung dann eingenommen wird, wenn das nicht der Fall ist und statt dessen ausreichender Wind, möglichst ohne Turbulenzen auf das Schiffsoberdeck geführt wird, wobei die Platte (10) bis zur Brücke (4) und deren Fenster ansteigt, und wobei das Vorderschiff lückenlos in die Brücke (4) des Schiffs übergeht und die Breite des Vorderschiffs von der Bugspitze her, wo das Vorderschiff am schmalsten ist, bis zur Brücke hin zunimmt.

2. Schiff nach Anspruch1,
**dadurch gekennzeichnet, dass** die Platte (10) um circa 15 bis 30° in zwei verschiedene Stellungen verschwenkbar ist.

3. Schiff nach Anspruch 2,
**dadurch gekennzeichnet, dass** die Platte (10) um circa 17 bis 23° in zwei verschiedene Stellungen (16, 17) verschwenkbar ist.

4. Schiff nach Anspruch 3,
**dadurch gekennzeichnet, dass** die Platte (10) um 19° in zwei verschiedene Stellungen verschwenkbar ist.

5. Schiff nach einem der vorhergehenden Ansprüche,
**dadurch gekennzeichnet, dass** die gegenüber der Horizontalen verschwenkbare Platte (10) an beiden Seiten von Seitenwanden (19, 20) begrenzt ist, welche Mittel (11, 12) zum Arretieren der Platte (10) in einer ersten oder zweiten Stellung (16, 17) aufweisen.

6. Schiff nach einem der vorhergehenden Ansprüche,
**dadurch gekennzeichnet, dass** wenigstens eine der beiden Seitenwände (19, 20), bevorzugt beide Seitenwände, eine Öffnung (8) zum Abfließen von Wasser aufweisen.

7. Schiff nach einem der vorhergehenden Ansprüche,
**dadurch gekennzeichnet, dass** Mittel (23) zum Heben bzw. Senken der Platte (10) vorgesehen sind.

8. Verfahren zum Betrieb eines Schiffes nach einem der vorhergehenden Ansprüche,
**dadurch gekennzeichnet, dass** bei schwerem Seegang, also hohem Wellengang die Platte (10) von der oberen Stellung (16) auf ihre untere Stellung (17) abgesenkt wird, damit Wellen, die auf das Vorderschiff einschlagen, sich dort brechen können und das auf das Vorderschiff (3) gelangende Wasser zu wenigstens einer Seite hin leicht abfließen kann.

## Claims

1. Ship with at least one sail rotor (5), whereby the ship (1) has a forecastle (3), which has relative to the horizontal a height adjustable and/or pivotable panel (10), wherein the panel can take an upper position and a lower position, the lower position being taken when there is high swell and breakwater function is desired and the higher position being taken, if this is not the case and instead sufficient wind is directed to the upper deck of the ship, preferably without turbulences, wherein the panel (10) rises to the bridge (4) and its windows and wherein the front of the ship seamlessly merges into the bridge (4) of the ship and the width of the front of the ship increases from the bow, where the front of the ship is narrowest, to the bridge.

2. Ship according to claim 1, **characterized in that** the panel (10) is pivotable by about 15 to 30° into two different positions.

3. Ship according to claim 2, **characterized in that** the panel (10) is pivotable by about 17 to 23° into two different positions (16, 17).

4. Ship according to claim 3, **characterized in that** the panel (10) is pivotable by 19° into two different positions.

5. Ship according to one of the preceding claims, **characterized in that** the panel (10) pivotable relative to the horizontal is delimited on both sides by sidewalls (19, 20) which include means (11, 12) for the latching of the panel (10) in a first or second position (16, 17).

6. Ship according to one of the preceding claims, **characterized in that** at least one of the two sidewalls (19, 20), preferably both sidewalls, include an opening (8) for the draining of water.

7. Ship according to one of the preceding claims, **characterized in that** means (23) for the lifting or lowering of the panel (10) are provided.

8. Method for the operation of a ship according to one of the preceding claims, **characterized in that** upon heavy seas, especially upon high waves, the panel (10) is lowered from the upper position (16) to its lower position (17) so that waves which strike the forecastle can break thereon and that water ending up on the forecastle (3) can easily drain to at least one side.

## Revendications

1. Navire avec au moins un rotor à pales entoilées (5), dans lequel le navire (1) présente un gaillard d'avant (3), qui présente une plaque (10) pouvant être ajustée en hauteur et/ou pouvant pivoter par rapport à l'horizontale en hauteur, dans lequel la plaque peut adopter une position supérieure et une position inférieure, dans lequel la position inférieure est adoptée quand une mer agitée est à noter et qu'une fonction de brise-lames est souhaitée, et dans lequel la position supérieure est adoptée quand cela n'est pas le cas et qu'en lieu et place un vent suffisant, dans la mesure du possible sans turbulence, est guidé sur le pont supérieur de navire, dans lequel la plaque (10) est ascendante jusqu'au pont (4) et sa fenêtre, et dans lequel le gaillard d'avant se prolonge sans interruption pour devenir le pont (4) du navire et la largeur du gaillard d'avant augmente depuis la pointe de proue, où le gaillard d'avant est le plus étroit, jusqu'au pont.

2. Navire selon la revendication 1,
**caractérisé en ce que** la plaque (10) peut pivoter dans deux positions différentes d'environ 15 à 30°.

3. Navire selon la revendication 2,
**caractérisé en ce que** la plaque (10) peut pivoter dans deux positions (16, 17) différentes d'environ 17 à 23°.

4. Navire selon la revendication 3,
**caractérisé en ce que** la plaque (10) peut pivoter dans deux positions différentes de 19°.

5. Navire selon l'une quelconque des revendications précédentes,
**caractérisé en ce que** la plaque (10) pouvant pivoter par rapport à l'horizontale est limitée au niveau des deux côtés de parois latérales (19, 20), lesquelles présentent des moyens (11, 12) servant à bloquer la plaque (10) dans une première ou deuxième position (16, 17).

6. Navire selon l'une quelconque des revendications précédentes,
**caractérisé en ce qu'**au moins une des deux parois latérales (19, 20), de manière préférée les deux parois latérales, présentent une ouverture (8) servant à évacuer l'eau.

7. Navire selon l'une quelconque des revendications précédentes,
**caractérisé en ce que** sont prévus des moyens (23) servant à soulever ou à abaisser la plaque (10).

8. Procédé servant à faire fonctionner un navire selon l'une quelconque des revendications précédentes,
**caractérisé en ce que** dans le cas d'une mer très agitée, et donc en cas de forte houle, la plaque (10) est abaissée depuis la position supérieure (16) à sa position inférieure (17) afin que les vagues, qui viennent frapper le gaillard d'avant, puissent s'y briser et que l'eau parvenant sur le gaillard d'avant (3) puisse s'évacuer aisément vers au moins un côté.
